# EUROPÄISCHE PATENTSCHRIFT

(11) **EP 3 827 324 B1**
(45) Veröffentlichungstag und Bekanntmachung des Hinweises auf die Patenterteilung: **04.01.2023**
(21) Anmeldenummer: 19725970.8
(22) Anmeldetag: 21.05.2019
(51) Int. Cl.: G06F 3/01, G02B 27/00

(54) **VERFAHREN SOWIE SYSTEM ZUM AUSWERTEN VON IN KRAFTFAHRZEUGEN WIEDERGEGEBENEN VIRTUELLEN INHALTEN**
METHOD AND SYSTEM FOR EVALUATING VIRTUAL CONTENT REPRODUCED IN MOTOR VEHICLES
PROCÉDÉ ET SYSTÈME D'ÉVALUATION DE CONTENUS VIRTUELS REPRODUITS DANS DES VÉHICULES AUTOMOBILES

(30) Priorität: 25.07.2018 DE 102018212410
(43) Veröffentlichungstag der Anmeldung: 02.06.2021
(73) Patentinhaber: Audi AG, 85045 Ingolstadt (DE)
(72) Erfinder: KÜHNE, Marcus, 92339 Beilngries (DE)
(74) Vertreter: Hofstetter, Schurack & Partner
(86) Internationale Anmeldenummer: PCT/EP2019/063013
(87) Internationale Veröffentlichungsnummer: WO 2020/020509

(56) Entgegenhaltungen:
- DE-A1-102015 003 882
- DE-A1-102015 205 921
- US-A1- 2011 040 707

## Beschreibung

Die Erfindung betrifft ein Verfahren sowie ein System zum Auswerten von in Kraftfahrzeugen wiedergegebenen virtuellen Inhalten.

Zukünftig werden sich in Kraftfahrzeugen spätestens mit dem Einsatz des autonomen Fahrens mit hoher Wahrscheinlichkeit Möglichkeiten etablieren, mittels welchen Fahrzeuginsassen virtuelle Inhalte während der Fahrt konsumieren können. Dies kann beispielsweise mittels Virtual-Reality-Brillen oder Augmented-Reality-Brillen erfolgen, welche die Fahrzeuginsassen während der Fahrt aufgesetzt haben.

Die Wiedergabe von virtuellen Inhalten, beispielsweise mit Virtual-Reality-Brillen, ist an sich schon bekannt. So zeigt die US 2014/0067768 A1 ein Verfahren zur Inhaltszuordnung und Verlaufsverfolgung in einer virtuellen oder erweiterten Realität. Das Verfahren ermöglicht das Aufzeichnen eines Verlaufs einer Nutzung der virtuellen oder erweiterten Realität auf einem Server eines Dienstleisters, wobei zu einem späteren Zeitpunkt ein früherer Zustand wieder hergestellt werden kann.

Die DE 10 2015 205 921 A1 zeigt ein Verfahren zum Betreiben einer von einem Fahrer aufgesetzten Datenbrille. Ein Belastungszustand des Fahrers bezüglich einer Fahrsituation wird mittels Sensoren erfasst, wobei zur Minimierung einer Ablenkung des Fahrers bei Bedarf mittels der Datenbrille angezeigte Inhalte ausgeblendet werden.

Die DE 10 2014 009 302 A1 zeigt ein Verfahren zum Betreiben einer Virtual-Reality- Brille, wobei eine Träger der Virtual-Reality-Brille von einer virtuellen Beobachtungsposition zur nächsten springen kann, um seinen virtuellen Standpunkt innerhalb einer angezeigten virtuellen Umgebung sprungartig zu verändern.

Es ist die Aufgabe der vorliegenden Erfindung, eine Lösung bereitzustellen, mittels welcher die Wiedergabe von virtuellen Inhalten in Kraftfahrzeugen verbessert werden kann.

Diese Aufgabe wird durch ein Verfahren sowie durch ein System zum Auswerten von in Kraftfahrzeugen wiedergegebenen virtuellen Inhalten mit den Merkmalen der unabhängigen Patentansprüche gelöst. Vorteilhafte Ausgestaltungen mit zweckmäßigen und nicht-trivialen Weiterbildungen der Erfindung sind in den abhängigen Ansprüchen angegeben.

Bei dem erfindungsgemäßen Verfahren zum Auswerten von in Kraftfahrzeugen wiedergegebenen virtuellen Inhalten werden Daten an eine fahrzeugexterne Servereinrichtung übermittelt, welche eine während der Wiedergabe der virtuellen Inhalte mittels des jeweiligen Kraftfahrzeugs befahrene Strecke, die jeweiligen wiedergegebenen virtuellen Inhalte und/oder Zustände der jeweiligen Fahrzeuginsassen während der Wiedergabe der virtuellen Inhalte charakterisieren. Die übermittelten Daten werden mittels der fahrzeugexternen Servereinrichtung ausgewertet.

Es kann also - vorzugsweise anonymisiert - erfasst und umfassend ausgewertet sowie aufbereitet werden, wann, wo, wie lange welche virtuellen Inhalte genutzt werden. Dadurch kann Entwicklern und Anbietern von solchen virtuellen Inhalten ein möglichst umfassendes Bild über die Anwendungsperformance, aber auch mögliche Schwächen ihrer eigenen Inhalte bereitgestellt werden.

Es ist vorgesehen, dass die Daten erst dann, insbesondere nur dann, an die Servereinrichtung übertragen werden, wenn erfasst wird, dass eine jeweilige Wiedergabe von virtuellen Inhalten in einem der Kraftfahrzeuge vom jeweilige Fahrzeuginsassen abgebrochen wurde.

Die Übermittlung der besagten Daten erfolgt also dann, wenn die jeweilige Wiedergabe der virtuellen Inhalte von dem jeweiligen Fahrzeuginsassen selbst abgebrochen wurde, also die betreffende Wiedergabe vor dem Erreichen ihres vorgesehenen Endes vom Fahrzeuginsassen abgebrochen wurde. Der Erfindung liegt dabei die Erkenntnis zugrunde, dass ein Abbruch der jeweiligen Wiedergabe der virtuellen Inhalte vor dem angedachten Ende oder aber generell ungewöhnlich schnell ein Indiz für ein entsprechendes Defizit bei der Wiedergabe der virtuellen Inhalte ist. Kommt es zu einem solchen Abbruch, ist dies für sich genommen schon einmal eine wichtige Information, um die angebotenen und wiedergegebenen virtuellen Inhalte zu verbessern.

Dadurch, dass Daten, welche eine jeweilige während der Wiedergabe der virtuellen Inhalte mittels des jeweiligen Kraftfahrzeugs befahrene Strecke charakterisierende Daten an die fahrzeugexterne Servereinrichtung übermittelt werden, kann diese auswerten, inwiefern eine Streckenführung der jeweils befahrenen Strecke gegebenenfalls zu einem Abbruch des betreffenden virtuellen Inhalts geführt haben könnte.

Indem Daten zu den jeweiligen wiedergegebenen Inhalten, welche abgebrochen worden sind, alternativ oder zusätzlich an die fahrzeugexterne Servereinrichtung übermittelt werden, können die wiedergegebenen virtuellen Inhalte, welche abgebrochen worden sind, selbst daraufhin untersucht beziehungsweise ausgewertet werden, inwiefern diese dazu beigetragen haben, dass der betreffende Fahrzeuginsasse die Wiedergabe vorzeitig unterbrochen hat.

In Kenntnis von Daten, welche Zustände der jeweiligen Fahrzeuginsassen während der Wiedergabe der virtuellen Inhalte charakterisieren, ist es mittels der fahrzeugexternen Servereinrichtung möglich, zu untersuchen, inwiefern jeweilige Zustände der Fahrzeuginsassen, insbesondere im Hinblick auf eine sogenannte Motion Sickness beziehungsweise Simulator Sickness, dazu geführt haben, dass die jeweilige Wiedergabe frühzeitig unterbrochen wurde. Insbesondere in Kenntnis der jeweils befahrenen Strecke, der jeweils wiedergegebenen virtuellen Inhalte und eines jeweiligen Zustands des betreffenden Fahrzeuginsassen, der die Wiedergabe des virtuellen Inhalts unterbrochen hat, ist eine besonders vollständige und aussagekräftige Auswertung von Abbrüchen beziehungsweise Abbruchraten bei der Wiedergabe von virtuellen Inhalten in Kraftfahrzeugen möglich. Durch Auswertung dieser Daten mittels der fahrzeugexternen Servereinrichtung ist es möglich, die angebotenen virtuellen Inhalte insbesondere auf verschiedene Strecken und verschiedene Nutzertypen angepasst zu optimieren.

Es ist auch möglich, dass zumindest ein Teil der Daten oder alle Daten auch dann an die fahrzeugexterne Servereinrichtung übermittelt werden, wenn die jeweilige Wiedergabe der virtuellen Inhalte nicht abgebrochen wurde. Dies kann beispielsweise fortlaufend mit der Nutzung bzw. mit der Wiedergabe der virtuellen Inhalte erfolgen. Es ist beispielsweise auch möglich, dass jeweilige Nutzer um eine Bewertung gebeten werden, nachdem sie die virtuellen Inhalte zu Ende konsumiert haben. In dem Zusammenhang kann es vorgesehen sein, dass besonders gute und besonders schlechte Bewertungen automatisch dazu führen, dass die Daten an die fahrzeugexterne Servereinrichtung übermittelt werden. Die Bewertung kann beispielsweise mit einem Punktesystem erfolgen. Besonders hohe und besonders niedrige Punktzahlen können dann das Übertragen der Daten auslösen. Die besonders schlechten und besonders guten Bewertungen sind sehr hilfreiche Hinweise, um die virtuellen Inhalte fortlaufend zu verbessern und an die Anforderungen der Benutzer anzupassen. Die Benutzer können beispielsweise auch zustimmen, dass gewissen Daten, z.B. hinsichtlich der befahrenen Strecke, der virtuellen Inhalte und/oder der Nutzerzustände nicht anonymisiert übertragen werden können. Dies ermöglicht eine auf den jeweiligen Nutzers individuell abgestimmte Verbesserung der angebotenen virtuellen Inhalte. Sofern keine explizite Zustimmung vorliegt, die Daten nicht anonymisiert zu übertragen, werden sämtliche Daten anonymisiert übertragen, sodass kein Bezug zwischen den Daten und den jeweiligen Nutzern hergestellt werden kann.

Eine vorteilhafte Ausführungsform der Erfindung sieht vor, dass die virtuellen Inhalte mittels jeweiligen von den Fahrzeuginsassen getragenen Virtual-Reality-Brillen, Augmented-Reality-Brillen, Augmented-Reality-Kontaktlinsen oder mittels in jeweilige Fenster der Kraftfahrzeuge integrierten kontaktanalogen Anzeigen wiedergegeben werden. Mittels Virtual-Reality-Brillen ist es möglich, die betreffenden Fahrzeuginsassen vollständig von ihrer Umgebung visuell abzuschirmen, sodass diese visuell komplett in die virtuellen Inhalte eintauchen können. Mittels Augmented-Reality-Brillen beziehungsweise Augmented-Reality-Kontaktlinsen oder mittels der besagten kontaktanalogen Anzeigen ist es möglich, virtuelle Inhalte einzublenden, welche die Realität erweitern, die der betreffende Fahrzeuginsasse visuell wahrnimmt.

Eine weitere vorteilhafte Ausführungsform der Erfindung sieht vor, dass hinsichtlich der jeweiligen wiedergegebenen Inhalte an die Servereinrichtung übertragen wird, wie stark virtuelle Bewegungen innerhalb einer jeweiligen angezeigten virtuellen Umgebung waren und/oder was für eine Geschichte mittels der virtuellen Inhalte wiedergegeben wurde. Besonders starke virtuelle Bewegungen können insbesondere in Kombination mit dazu konträren Bewegungen in der Realität zur sogenannten Simulator Sickness führen. Daher sind die virtuellen Bewegungen innerhalb der jeweils angezeigten virtuellen Umgebung ein wichtiges Indiz dafür, wie Abbrüche von wiedergegebenen virtuellen Inhalten zu bewerten sind. Neben dem Auftreten von Übelkeit spielt zudem auch eine wichtige Rolle, inwiefern eine jeweilige Geschichte, die mittels der virtuellen Inhalte wiedergegeben wurde, für die betreffenden Fahrzeuginsassen interessant oder weniger interessant war. In Kenntnis diesbezüglicher Informationen beziehungsweise Daten können auch Rückschlüsse darauf gezogen werden, warum gewisse Wiedergaben von virtuellen Inhalten abgebrochen worden sind.

Gemäß einer weiteren vorteilhaften Ausführungsform der Erfindung ist es vorgesehen, dass an die Servereinrichtung übermittelt wird, wann die Wiedergabe der virtuellen Inhalte abgebrochen wurde. Beispielsweise können Daten beziehungsweise Informationen übermittelt werden, welche kennzeichnen, wie lange bevor die jeweilige Wiedergabe ihr vorgesehenes Ende erreicht hätte, diese abgebrochen wurde. Werden bestimmte wiedergegebene virtuelle Inhalte besonders frühzeitig abgebrochen, so lässt sich auf eine besonders niedrige Akzeptanz bei dem betreffenden Fahrzeuginsassen schließen. Der Abbruchzeitpunkt der betreffenden Wiedergabe dervirtuellen Inhalte stellt also eine wichtige Information dahingehend dar, Abbrüche beziehungsweise Abbruchraten der Wiedergaben der virtuellen Inhalte auszuwerten und zu analysieren.

In weiterer vorteilhafter Ausgestaltung der Erfindung ist es vorgesehen, dass hinsichtlich der mittels der jeweiligen Kraftfahrzeuge während der Wiedergabe der virtuellen Inhalte befahrenen Strecke ein jeweiliges Kurvenprofil und/oder Höhenprofil der Strecke erfasst und an die Servereinrichtung übermittelt wird. Der Erfindung liegt in diesem Zusammenhang die Erkenntnis zugrunde, dass bei einer besonders guten Übereinstimmung zwischen virtuellen Bewegungen und realen Bewegungen die wiedergegebenen virtuellen Inhalte als besonders realistisch anmutend wahrgenommen werden, wobei bei einem hohen Übereinstimmungsgrad zudem noch der Motion Sickness beziehungsweise der Simulator Sickness entgegengewirkt werden kann. Insofern bieten die Kurvenprofile beziehungsweise Höhenprofile der jeweils befahrenen Strecke wertvolle Informationen für eine Auswertung der abgebrochenen Wiedergaben der virtuellen Inhalte.

Eine weitere vorteilhafte Ausführungsform der Erfindung sieht vor, dass während der Wiedergabe der virtuellen Inhalte Übelkeit bei den Fahrzeuginsassen charakterisierende Körpermesswerte mittels einer fahrzeugseitigen und/oder mittels von den Fahrzeuginsassen getragener Erfassungseinrichtungen erfasst und an die Servereinrichtung übermittelt werden, welche basierend darauf jeweilige Übelkeitswerte ermittelt. Beispielsweise ist es möglich, dass als Übelkeit bei den Fahrzeuginsassen charakterisierende Körpermesswerte ein Puls und/oder Kopfbewegungen erfasst werden. In Kenntnis dieser Körpermesswerte ist es möglich, Analysen dahingehend zu betreiben, ob und inwiefern das Auftreten von Übelkeit aufgrund von der Simulator Sickness beziehungsweise Motion Sickness die Wiedergabe gewisser virtueller Inhalte abgebrochen worden ist. So ist es beispielsweise möglich, mittels im Fahrzeuginnenraum vorgesehener Kameras besagte Kopfbewegungen der Fahrzeuginsassen zu erfassen. Wird dabei zum Beispiel festgestellt, dass der betreffende Fahrzeuginsasse seinen Kopf nur noch wenig oder gar nicht mehr bewegt, kann dies ein Indiz dafür sein, dass ihm gerade aufgrund des Konsums der wiedergegebenen virtuellen Inhalte übel wird. Auch kann ein steigender Puls ein Indiz dafür sein, dass der betreffende Fahrzeuginsasse gerade eine Motion Sickness beziehungsweise Simulator Sickness erleidet. Der Puls der Fahrzeuginsassen kann beispielsweise mittels einer Smartwatch oder dergleichen erfasst werden, welche der Fahrzeuginsasse am Handgelenk trägt. Darüber hinaus können auch verschiedenste andere Körpermesswerte erfasst und an die Servereinrichtung übermittelt werden, welche aufschlussreiche Hinweise auf das Auftreten von Motion Sickness beziehungsweise Simulator Sickness liefern können.

In weiterer vorteilhafter Ausgestaltung der Erfindung ist es vorgesehen, dass mittels der Servereinrichtung ermittelt wird, bei welchen Kombinationen jeweiliger Strecken und jeweiliger virtueller Inhalte die ermittelten Übelkeitswerte einen vorgegebenen Übelkeitswert überschritten haben, wobei diejenigen Kombinationen, bei welchen der vorgegebene Übelkeitswert überschritten wurde, zukünftig seltener als zuvor zur Wiedergabe angeboten werden. Dadurch können ungünstige Kombinationen von bestimmten Streckenführungen und bestimmten virtuellen Inhalten zukünftig weniger stark angeboten werden. Ist es beispielsweise bei einem bestimmten wiederzugebenden virtuellen Erlebnis vorgesehen, dass sehr starke virtuelle Bewegungen auftreten, kann es ungünstig sein, dieses virtuelle Ergebnis mit einer Streckenführung zu paaren, welche keine Auf- und Abbewegungen und auch keine Kurven aufweist. Umgekehrt kann es auch von Nachteil sein, wenn die Streckenführung sehr unruhig ist, beispielsweise im Hinblick auf das jeweilige Kurvenprofil und Höhenprofil, wobei ein bestimmtes virtuelles Erlebnis eher ruhige oder gar keine virtuellen Bewegungen beinhaltet. Durch Vergleich der ermittelten Übelkeitswerte mit dem vorgegebenen Übelkeitswert können so ungünstige Kombinationen im Hinblick auf die Streckenführung und die jeweiligen virtuellen Inhalte herausgefiltert und für zukünftige Wiedergaben seltener angeboten werden.

Erfindungsgemäß ist es vorgesehen, dass, wenn erfasst wird, dass eine Wiedergabe von virtuellen Inhalten in einem der Kraftfahrzeuge von einem Fahrzeuginsassen abgebrochen wurde, zudem erfasst wird, ob sich der betreffende Fahrzeuginsasse danach einen anderen virtuellen Inhalt wiedergeben lässt oder eine Wiedergabe jeglicher virtueller Inhalte unterlässt, wobei diesbezügliche Daten ebenfalls an die Servereinrichtung übermittelt werden. Lässt sich der betreffende Fahrzeuginsasse beispielsweise direkt nach dem Abbruch einen anderen virtuellen Inhalt anzeigen, ohne dass er diesen beispielsweise vorzeitig unterbricht, so kann dies ein gutes Indiz dafür sein, dass er die zuvor abgebrochenen virtuellen Inhalte einfach inhaltlich nicht gut fand, er jedoch prinzipiell nicht abgeneigt ist, virtuelle Inhalte während der Fahrt zu genießen. Durch einen Vergleich der abgebrochenen virtuellen Inhalte und der danach aufgerufenen virtuellen Inhalte können zudem weitere Erkenntnisse gewonnen werden, welche zum Abbruch der zuvor wiedergegebenen virtuellen Inhalte geführt haben. Unterlässt der Fahrzeuginsasse nach dem Abbruch die Wiedergabe jeglicher virtueller Inhalte, so kann dies beispielsweise ein Indiz dafür sein, dass der Fahrzeuginsasse an sich solchen virtuellen Inhalten abgeneigt ist oder dass ihm beispielsweise so übel wurde, dass er zunächst eine längere Pause im Hinblick auf den Konsum weiterer virtueller Inhalte benötigt.

Die Erfindung sieht vor, dass, wenn erfasst wird, dass eine Wiedergabe von virtuellen Inhalten in einem der Kraftfahrzeuge von einem Fahrzeuginsassen abgebrochen wurde, alternativ oder zudem eine Abfrage an den betreffenden Fahrzeuginsassen ausgegeben wird, warum er die Wiedergabe abgebrochen hat, wobei eine Antwort des Fahrzeuginsassen betreffende Daten ebenfalls an die Servereinrichtung übermittelt werden. So können ganz spezifische Informationen vom Fahrzeuginsassen gewonnen werden, warum er die Wiedergabe dieser ganz speziellen virtuellen Inhalte abgebrochen hat.

In weiterer vorteilhafter Ausgestaltung der Erfindung ist es vorgesehen, dass, wenn erfasst wird, dass eine Wiedergabe von virtuellen Inhalten von einem Fahrzeuginsassen nicht abgebrochen wurde, bis die Widergabe ihr vorgesehenes Ende erreicht hat, eine Bewertung vom betreffenden Fahrzeuginsassen abgefragt wird, wobei eine Bewertung des Fahrzeuginsassen betreffende Daten ebenfalls an die Servereinrichtung übermittelt werden. So kann beispielsweise auch eine positive Bewertung des Fahrzeuginsassen an die Servereinrichtung übermittelt werden. Ganz grundsätzlich hilft die abgefragte Bewertung des Fahrzeuginsassen, die Wiedergabe der virtuellen Inhalte fortlaufend zu verbessern.

Eine weitere vorteilhafte Ausführungsform der Erfindung sieht vor, dass bei der Bewertung abgefragt wird, wie die wiedergegebenen virtuellen Inhalte zur währenddessen befahrenen Strecke gepasst haben. So können wertvolle Rückschlüsse darauf gezogen werden, inwieweit die wiedergegebenen virtuellen Inhalte zur währenddessen befahrenen Strecke passen müssen, damit wiedergegebene virtuelle Inhalte nicht vor ihrem vorgesehenen Ende abgebrochen werden.

Gemäß einer weiteren vorteilhaften Ausführungsform der Erfindung ist es vorgesehen, dass mittels der Servereinrichtung ermittelt wird, zu welchen Bewertungen Kombinationen jeweiliger Strecken und jeweiliger virtueller Inhalte geführt haben, wobei diejenigen Kombinationen, welche eine vorgegebene Bewertungszahl überschreiten, zukünftig häufiger als zuvor zur Wiedergabe angeboten werden. So können besonders günstige Kombinationen jeweiliger Strecken und jeweiliger virtueller Inhalte basierend auf den Bewertungen der Fahrzeuginsassen herausgefiltert und zukünftig häufiger angeboten werden. Ein umgekehrtes Vorgehen ist natürlich auch möglich, bei welchem besonders niedrige Bewertungen von bestimmten Streckenkombinationen und Kombinationen virtueller Inhalte dazu führen, dass diese Kombinationen zukünftig eher seltener angeboten werden.

Eine weitere vorteilhafte Ausführungsform der Erfindung sieht vor, dass mittels der Servereinrichtung ermittelt wird, bei welchen Kombinationen jeweiliger Strecken und jeweiliger virtueller Inhalte es zu Abbrüchen bei der Wiedergabe der virtuellen Inhalte kam, wobei diejenigen Kombinationen, welche eine vorgegebene Abbruchrate überschreiten, zukünftig seltener als zuvor zur Wiedergabe angeboten werden. So können ganz einfach ungünstige Kombinationen von bestimmten Streckenführungen und bestimmten virtuellen Inhalten allein anhand der Abbruchrate ermittelt werden, um zukünftig diese ungünstigen Kombinationen seltener zur Wiedergabe anzubieten.

Das erfindungsgemäße System zum Auswerten von in Kraftfahrzeugen wiedergegebenen Inhalten gemäß dem erfindungsgemäßen Verfahren oder einer vorteilhaften Ausführungsform des erfindungsgemäßen Verfahrens umfasst eine fahrzeugexterne Servereinrichtung und Erfassungseinrichtungen zum Erfassen und Übermitteln von Daten an die fahrzeugexterne Servereinrichtung, welche eine während der Wiedergabe der virtuellen Inhalte mittels des jeweiligen Kraftfahrzeugs befahrene Strecke, die jeweiligen wiedergegebenen virtuellen Inhalte und/oder Zustände der Fahrzeuginsassen während der Wiedergabe der virtuellen Inhalte charakterisieren. Die Erfassungseinrichtungen ist dazu ausgebildet, die Daten erst dann an die Servereinrichtung zu übermitteln, wenn erfasst wird, dass eine jeweilige Wiedergabe von virtuellen Inhalten in einem der Kraftfahrzeuge von jeweiligen Fahrzeuginsassen abgebrochen wurde, und, wenn erfasst wird, dass eine Wiedergabe von virtuellen Inhalten in einem der Kraftfahrzeuge von einem Fahrzeuginsassen abgebrochen wurde, zudem zu erfassen, ob sich der betreffende Fahrzeuginsasse danach einen anderen virtuellen Inhalt wiedergeben lässt oder eine Wiedergabe jeglicher virtueller Inhalte unterlässt, und diesbezügliche Daten ebenfalls an die Servereinrichtung zu übermitteln; und/oder eine Abfrage an den betreffenden Fahrzeuginsassen aus-zugeben, warum er die Wiedergabe abgebrochen hat, und eine Antwort des Fahrzeuginsassen betreffende Daten ebenfalls an die Servereinrichtung zu übermitteln. Die Servereinrichtung ist dazu eingerichtet, die übermittelten Daten auszuwerten und basierend auf der Auswertung die Wiedergabe der virtuellen Inhalte im jeweiligen Kraftfahrzeug zu optimieren. Vorteilhafte Ausgestaltungen des erfindungsgemäßen Verfahrens sind als vorteilhafte Ausgestaltungen des erfindungsgemäßen Systems oder umgekehrt anzusehen, wobei das System insbesondere Mittel zur Durchführung der Verfahrensschritte aufweist.

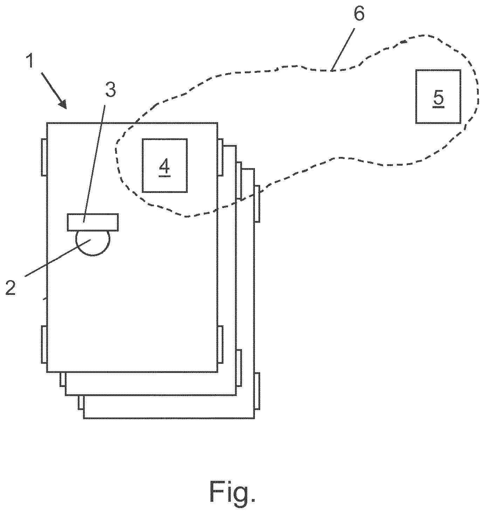

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Figur eine schematische Darstellung mehrerer Kraftfahrzeuge, in welchen jeweils ein Fahrzeuginsasse sitzt, der eine Virtual-Reality-Brille aufgesetzt hat, wobei mittels jeweiliger Erfassungseinrichtungen verschiedenste Daten an eine fahrzeugexterne Servereinrichtung übermittelt werden.

Mehrere Kraftfahrzeuge 1, in denen jeweilige Fahrzeuginsassen 2 mit einer aufgesetzten Virtual-Reality-Brille 3 sitzen, sind in einer stark schematisierten Darstellung in der einzigen Figur gezeigt. Je Kraftfahrzeug 1 ist zudem noch ganz schematisch eine Erfassungseinrichtung 4 dargestellt, welche dazu ausgelegt ist, Daten zu erfassen und an eine Servereinrichtung 5 zu übermitteln, welche eine während der Wiedergabe von virtuellen Inhalten mittels des jeweiligen Kraftfahrzeugs 1 befahrene Strecken, die jeweiligen wiedergegebenen virtuellen Inhalte und/oder Zustände der jeweiligen Fahrzeuginsassen 2 während der Wiedergabe der virtuellen Inhalte charakterisieren. Die Servereinrichtung 5 ist dazu eingerichtet, die übermittelten Daten auszuwerten. Die jeweiligen Erfassungseinrichtungen 4 und die fahrzeugexterne Servereinrichtung 5 bilden gemeinsam ein System 6 zum Auswerten von in den jeweiligen Kraftfahrzeugen 1 wiedergegebenen virtuellen Inhalten.

Nachfolgend wird ein Verfahren zum Auswerten von in den Kraftfahrzeugen 1 wiedergegebenen virtuellen Inhalten näher beschrieben. Dabei wird zwar Bezug auf die Virtual-Reality-Brillen 3 genommen, jedoch gelten die nachstehend zum Verfahren vorgebrachten Erläuterungen ebenso für Augmented-Reality-Brillen, Augmented-Reality-Kontaktlinsen oder in jeweilige Fenster der Kraftfahrzeuge 1 integrierte kontaktanaloge Anzeigen.

Wenn erfasst wird, dass eine jeweilige Wiedergabe von virtuellen Inhalten in einem der Kraftfahrzeuge 1 mittels einer jeweiligen Virtual-Reality-Brille 3 abgebrochen wurde, werden mittels der Erfassungseinrichtung 4 zuvor erfasste Daten an die fahrzeugexterne Servereinrichtung 5 übermittelt. Diese Daten charakterisieren eine während der Wiedergabe der virtuellen Inhalte mittels des jeweiligen Kraftfahrzeugs 1 befahrene Strecke, die jeweiligen wiedergegebenen virtuellen Inhalte und/oder Zustände der jeweiligen Fahrzeuginsassen 2 während der Wiedergabe der virtuellen Inhalte. Insbesondere wird hinsichtlich der jeweiligen wiedergegebenen virtuellen Inhalte an die Servereinrichtung 5 übertragen, wie stark virtuelle Bewegungen innerhalb einer jeweiligen angezeigten virtuellen Umgebung waren und/oder was für eine Geschichte mittels dervirtuellen Inhalte wiedergegeben wurde. Zudem kann auch an die Servereinrichtung 5 übermittelt werden, wann die jeweilige Wiedergabe der virtuellen Inhalte abgebrochen wurde, also beispielsweise wie viel vor einem jeweiligen angedachten Ende der Wiedergabe der virtuellen Inhalte diese Wiedergabe jedenfalls abgebrochen wurde. Das Übertragen der Daten kann auch zudem dann erfolgen, wenn die Wiedergabe der jeweiligen virtuellen Inhalte nicht abgebrochen wurde.

Die jeweiligen Erfassungseinrichtungen 4 können beispielsweise ein jeweiliges Kurvenprofil und/oder Höhenprofil der jeweiligen Strecke erfassen, die beim Wiedergeben der jeweiligen virtuellen Inhalte mittels der jeweiligen Kraftfahrzeuge 1 befahren wurde. Des Weiteren ist es möglich, dass mittels der Erfassungseinrichtungen 4 während der Wiedergabe der virtuellen Inhalte Übelkeit bei den Fahrzeuginsassen 2 charakterisierende Körpermesswerte erfasst und an die Servereinrichtung 5 übermittelt werden, welche basierend darauf jeweilige Übelkeitswerte ermittelt. Die Erfassungseinrichtungen 4 können beispielsweise Smartwatches umfassen, welche die Fahrzeuginsassen 2 am Handgelenk tragen. Die Erfassungseinrichtung 4 kann beispielsweise auch im Fahrzeuginnenraum angebrachte Kameras aufweisen, welche dazu ausgelegt sind, Kopfbewegungen des Fahrzeuginsassen 2 zu erfassen.

So kann die Servereinrichtung 5 zum Beispiel ermitteln, bei welchen Kombinationen jeweiliger Strecken und jeweiliger virtueller Inhalte die ermittelten Übelkeitswerte einen vorgegebenen Übelkeitswert überschritten haben, wobei diejenigen Kombinationen, bei welchen der vorgegebene Übelkeitswert überschritten wurde, zukünftig seltener als zuvor zur Wiedergabe in den Kraftfahrzeugen 1 angeboten werden. In Kenntnis der Körpermesswerte ist es also möglich auszuwerten, inwiefern unter Umständen das Auftreten von Übelkeit aufgrund einer Simulator Sickness beziehungsweise Motion Sickness dazu geführt hat, dass die betreffenden Fahrzeuginsassen 2 die Wiedergabe der jeweiligen virtuellen Inhalte abgebrochen haben.

Wenn erfasst wird, dass eine Wiedergabe von virtuellen Inhalten in einem der Kraftfahrzeuge 1 von einem der Fahrzeuginsassen 2 abgebrochen wurde, kann zudem erfasst werden, ob sich der betreffende Fahrzeuginsasse 2 danach einen anderen virtuellen Inhalt wiedergeben lässt oder eine Wiedergabe jeglicher virtueller Inhalte unterlässt, wobei diesbezüglich Daten ebenfalls an die Servereinrichtung 5 übermittelt werden. So ist es beispielsweise möglich zu erkennen, ob der Fahrzeuginsasse 2 grundsätzlich keine virtuellen Inhalte während der Fahrt konsumieren möchte oder ob er nur bestimmte andere virtuelle Inhalte eher bevorzugt.

Zudem kann nach dem Abbruch der Wiedergabe von virtuellen Inhalten auch eine Abfrage an den betreffenden Fahrzeuginsassen 2 ausgegeben werden, warum er die Wiedergabe abgebrochen hat, wobei eine Antwort des Fahrzeuginsassen 2 betreffend der Daten ebenfalls an die Servereinrichtung 5 übermittelt werden. Die Antworten der Fahrzeuginsassen 2 können dann im Detail ausgewertet werden, um zu erkennen, unter welchen Umständen wiedergegebene virtuelle Inhalte abgebrochen werden.

Bricht einer der Fahrzeuginsassen 2 hingegen beispielsweise die Wiedergabe von bestimmten virtuellen Inhalten nicht ab, bis die Wiedergabe ihr vorgegebenes Ende erreicht hat, kann eine Bewertung vom betreffenden Fahrzeuginsassen 2 abgefragt werden, wobei eine Bewertung des Fahrzeuginsassen 2 betreffend der Daten ebenfalls an die Servereinrichtung 5 übertragen werden. So liegen auch Bewertungen beziehungsweise Daten vor, wenn die Wiedergabe von virtuellen Inhalten gerade nicht abgebrochen wurde, sodass basierend auf diesen Informationen Rückschlüsse darüber gezogen werden können, welche Umstände dazu führen, dass die Wiedergabe von virtuellen Inhalten nicht vorzeitig abgebrochen wird. In dem Zusammenhang kann beispielsweise auch bei dem Fahrzeuginsassen 2 abgefragt werden, wie die wiedergegebenen virtuellen Inhalte zur währenddessen befahrenen Strecke gepasst haben. So lassen sich Erkenntnisse darüber gewinnen, was für Zusammenhänge zwischen befahrenen Strecken und wiedergegebenen virtuellen Inhalten bestehen, um diesbezüglich Optimierung vornehmen zu können. Vor allem kann die Servereinrichtung 5 ermitteln, zu welchen Bewertungen die Kombination jeweiliger Strecken und jeweiliger virtueller Inhalte geführt haben, wobei diejenigen Kombinationen, welche eine vorgegebene Bewertungszahl überschreiten, zukünftig häufiger als zuvor zur Wiedergabe angeboten werden.

Ganz allgemein kann die Servereinrichtung 5 auch ermitteln, bei welchen Kombinationen jeweiliger Strecken und jeweiliger virtueller Inhalte es zu Abbrüchen bei der Wiedergabe der virtuellen Inhalte kam, wobei diejenigen Kombinationen, welche eine vorgegebene Abbruchrate überschreiten, zukünftig seltener als zuvor zur Wiedergabe in den Kraftfahrzeugen 1 angeboten werden.

Mittels des erläuterten Verfahrens und Systems 6 ist es also möglich, abgebrochene Wiedergaben von virtuellen Inhalten in Kraftfahrzeugen 1 detailliert auszuwerten, um basierend darauf die Wiedergabe der virtuellen Inhalte in den Kraftfahrzeugen 1 zu optimieren. So können beispielsweise Qualitätsdefizite im Hinblick auf das eigentliche Storytelling der virtuellen Inhalte als auch technische Natur, insbesondere im Hinblick auf die sogenannte Motion Sickness, identifiziert werden. Die besagten Daten werden vorzugsweise vollkommen anonymisiert an die Servereinrichtung 5 übertragen, sodass dem Datenschutz der jeweiligen Fahrzeuginsassen 2 jederzeit Rechnung getragen werden kann.

## Patentansprüche

1. Verfahren zum Auswerten von in Kraftfahrzeugen (1) wiedergegebenen virtuellen Inhalten, umfassend die Schritte:
- Übermitteln von Daten an eine fahrzeugexterne Servereinrichtung (5), welche eine während der Wiedergabe der virtuellen Inhalte mittels des jeweiligen Kraftfahrzeugs (1) befahrene Strecke, die jeweiligen wiedergegebenen virtuellen Inhalte und/oder Zustände der jeweiligen Fahrzeuginsassen (2) während der Wiedergabe der virtuellen Inhalte charakterisieren, wobei die Daten erst dann an die Servereinrichtung (5) übermittelt werden, wenn erfasst wird, dass eine jeweilige Wiedergabe von virtuellen Inhalten in einem der Kraftfahrzeuge (1) von jeweiligen Fahrzeuginsassen (2) abgebrochen wurde;
- wenn erfasst wird, dass eine Wiedergabe von virtuellen Inhalten in einem der Kraftfahrzeuge (1) von einem Fahrzeuginsassen (2) abgebrochen wurde, zudem:
• Erfassen, ob sich der betreffende Fahrzeuginsasse (2) danach einen anderen virtuellen Inhalt wiedergeben lässt oder eine Wiedergabe jeglicher virtueller Inhalte unterlässt, wobei diesbezügliche Daten ebenfalls an die Servereinrichtung (5) übermittelt werden;
und/oder
• Ausgeben einer Abfrage an den betreffenden Fahrzeuginsassen (2), warum er die Wiedergabe abgebrochen hat, wobei eine Antwort des Fahrzeuginsassen (2) betreffende Daten ebenfalls an die Servereinrichtung (5) übermittelt werden;
- Auswerten der übermittelten Daten mittels der fahrzeugexternen Servereinrichtung (5);
- Optimieren der Wiedergabe der virtuellen Inhalte im jeweiligen Kraftfahrzeug (1) basierend auf der Auswertung der übermittelten Daten.

2. Verfahren nach Anspruch 1,
**dadurch gekennzeichnet, dass**
die virtuellen Inhalte mittels jeweiligen von den Fahrzeuginsassen (2) getragenen Virtual-Reality-Brillen (3), Augmented-Reality-Brillen, Augmented-Reality-Kontaktlinsen oder in jeweilige Fenster der Kraftfahrzeuge integrierten kontaktanalogen Anzeigen wiedergegeben werden.

3. Verfahren nach einem der vorhergehenden Ansprüche,
**dadurch gekennzeichnet, dass**
hinsichtlich der jeweiligen wiedergegebenen virtuellen Inhalte an die Servereinrichtung (5) übertragen wird, wie stark virtuelle Bewegungen innerhalb einer jeweiligen angezeigten virtuellen Umgebung waren und/oder was für eine Geschichte mittels des virtuellen Inhalte wiedergegeben wurde.

4. Verfahren nach einem der vorhergehenden Ansprüche,
**dadurch gekennzeichnet, dass**
an die Servereinrichtung (5) übermittelt wird, wann die Wiedergabe der virtuellen Inhalte abgebrochen wurde.

5. Verfahren nach einem der vorhergehenden Ansprüche,
**dadurch gekennzeichnet, dass**
hinsichtlich der mittels der jeweiligen Kraftfahrzeuge (1) während der Wiedergabe der virtuellen Inhalte befahrenen Strecke ein jeweiliges Kurvenprofil und/oder Höhenprofil der Strecke erfasst und an die Servereinrichtung (5) übermittelt wird.

6. Verfahren nach einem der vorhergehenden Ansprüche,
**dadurch gekennzeichnet, dass**
während der Wiedergabe der virtuellen Inhalte Übelkeit bei den Fahrzeuginsassen (2) charakterisierende Körpermesswerte mittels einer fahrzeugseitigen und/oder mittels von den Fahrzeuginsassen (2) getragener Erfassungseinrichtungen (4) erfasst und an die Servereinrichtung (5) übermittelt werden, welche basierend darauf jeweilige Übelkeitswerte ermittelt.

7. Verfahren nach Anspruch 6,
**dadurch gekennzeichnet, dass**
als Übelkeit bei den Fahrzeuginsassen (2) charakterisierende Körpermesswerte ein Puls und/oder Kopfbewegungen erfasst werden.

8. Verfahren nach einem der Ansprüche 6 oder 7,
**dadurch gekennzeichnet, dass**
mittels der Servereinrichtung (5) ermittelt wird, bei welchen Kombinationen jeweiliger Strecken und jeweiliger virtueller Inhalte die ermittelten Übelkeitswerte einen vorgegebenen Übelkeitswert überschritten haben, wobei diejenigen Kombinationen, bei welchen der vorgegebene Übelkeitswert überschritten wurde, zukünftig seltener als zuvor zur Wiedergabe angeboten werden.

9. Verfahren nach einem der vorhergehenden Ansprüche,
**dadurch gekennzeichnet, dass**
wenn erfasst wird, dass eine Wiedergabe von virtuellen Inhalten von einem Fahrzeuginsassen (2) nicht abgebrochen wurde bis die Wiedergabe ihr vorgesehenes Ende erreicht hat, eine Bewertung vom betreffenden Fahrzeuginsassen (2) abgefragt wird, wobei eine Bewertung des Fahrzeuginsassen betreffende Daten ebenfalls an die Servereinrichtung (5) übermittelt werden.

10. Verfahren nach Anspruch 9,
**dadurch gekennzeichnet, dass**
mittels der Servereinrichtung (5) ermittelt wird, zu welchen Bewertungen Kombinationen jeweiliger Strecken und jeweiliger virtueller Inhalte geführt haben, wobei diejenigen Kombinationen, welche eine vorgegebene Bewertungszahl überschreiten, zukünftig häufiger als zuvor zur Wiedergabe angeboten werden.

11. Verfahren nach einem der vorhergehenden Ansprüche,
**dadurch gekennzeichnet, dass**
mittels der Servereinrichtung (5) ermittelt wird, bei welchen Kombinationen jeweiliger Strecken und jeweiliger virtueller Inhalte es zu Abbrüchen bei der Wiedergabe der virtuellen Inhalte kam, wobei diejenigen Kombinationen, welche eine vorgegebene Abbruchrate überschreiten, zukünftig seltener als zuvor zur Wiedergabe angeboten werden.

12. System (6) zum Auswerten von in Kraftfahrzeugen (1) wiedergegebenen virtuellen Inhalten gemäß einem Verfahren nach einem der vorhergehenden Ansprüche, umfassend eine fahrzeugexterne Servereinrichtung (5) und Erfassungseinrichtungen (4) zum Erfassen und Übermitteln von Daten an die fahrzeugexterne Servereinrichtung (5), welche eine während der Wiedergabe der virtuellen Inhalte mittels des jeweiligen Kraftfahrzeugs (1) befahrene Strecke, die jeweiligen wiedergegebenen virtuellen Inhalte und/oder Zustände der Fahrzeuginsassen (2) während der Wiedergabe der virtuellen Inhalte charakterisieren, wobei
die Erfassungseinrichtungen (4) dazu ausgebildet ist, die Daten erst dann an die Servereinrichtung (5) zu übermitteln, wenn erfasst wird, dass eine jeweilige Wiedergabe von virtuellen Inhalten in einem der Kraftfahrzeuge (1) von jeweiligen Fahrzeuginsassen (2) abgebrochen wurde, und, wenn erfasst wird, dass eine Wiedergabe von virtuellen Inhalten in einem der Kraftfahrzeuge von einem Fahrzeuginsassen (2) abgebrochen wurde, zudem:
- zu erfassen, ob sich der betreffende Fahrzeuginsasse (2) danach einen anderen virtuellen Inhalt wiedergeben lässt oder eine Wiedergabe jeglicher virtueller Inhalte unterlässt, und diesbezügliche Daten ebenfalls an die Servereinrichtung (5) zu übermitteln;
und/oder
- eine Abfrage an den betreffenden Fahrzeuginsassen (2) auszugeben, warum er die Wiedergabe abgebrochen hat, und eine Antwort des Fahrzeuginsassen (2) betreffende Daten ebenfalls
an die Servereinrichtung (5) zu übermitteln; wobei
die Servereinrichtung (5) dazu eingerichtet ist, die übermittelten Daten auszuwerten und basierend auf der Auswertung die Wiedergabe der virtuellen Inhalte im jeweiligen Kraftfahrzeug (1) zu optimieren.

## Claims

1. A method for evaluating virtual contents reproduced in motor vehicles (1), comprising the steps of:
- transferring data to a server device (5) external to vehicle, which data characterizes a route traveled by means of the respective motor vehicle (1) during the reproduction of the virtual contents, the respective reproduced virtual contents and/or states of the respective vehicle occupants (2) during the reproduction of the virtual contents, wherein the data is transferred to the server device (5) only if it is captured that a respective reproduction of virtual contents was aborted by respective vehicle occupants (2) in one of the motor vehicles (1);
- if it is captured that a reproduction of virtual contents was aborted by a vehicle occupant (2) in one of the motor vehicles (1), in addition:
• capturing if the concerned vehicle occupant (2) causes a different virtual content to be reproduced or omits a reproduction of any virtual contents thereafter, wherein relevant data is also transferred to the server device (5);
and/or
• outputting a query to the concerned vehicle occupant (2), why he has aborted the reproduction, wherein data relating to an answer of the vehicle occupant (2) is also transferred to the server device (5);
- evaluating the transferred data by means of the server device (5) external to vehicle;
- optimizing the reproduction of the virtual contents in the respective motor vehicle (1) based on the evaluation of the transferred data.

2. The method according to claim 1,
**characterized in that**
the virtual contents are reproduced by means of respective virtual reality goggles (3), augmented reality goggles, augmented reality contact lenses worn by the vehicle occupants (2) or contact-analogue displays integrated in respective windows of the motor vehicles.

3. The method according to any one of the preceding claims,
**characterized in that**
with respect to the respective reproduced virtual contents, it is transmitted to the server device (5) how severe virtual movements within a respective displayed virtual environment have been and/or what a history has been reproduced by means of the virtual contents.

4. The method according to any one of the preceding claims,
**characterized in that**
it is transferred to the server device (5) when the reproduction of the virtual contents was aborted.

5. The method according to any one of the preceding claims,
**characterized in that**
with respect to the route traveled by means of the respective motor vehicles (1) during the reproduction of the virtual contents, a respective curve profile and/or height profile of the route are captured and transferred to the server device (5).

6. The method according to any one of the preceding claims,
**characterized in that**
during the reproduction of the virtual contents, body measurement values characterizing nausea in the vehicle occupants (2) are captured by means of capturing devices (4) on the vehicle side and/or worn by the vehicle occupants (2) and transferred to the server device (5), which ascertains respective nausea values based thereon.

7. The method according to claim 6,
**characterized in that**
a pulse and/or head movements are captured as the body measurement values characterizing nausea in the vehicle occupants (2).

8. The method according to any one of claims 6 or 7,
**characterized in that**
it is ascertained by means of the server device (5), in which combinations of respective routes and respective virtual contents the ascertained nausea values have exceeded a preset nausea value, wherein those combinations, in which the preset nausea value has been exceeded, are offered more rarely than before for reproduction in the future.

9. The method according to any one of the preceding claims,
**characterized in that**
if it is captured that a reproduction of virtual contents was not aborted by a vehicle occupant (2) until the reproduction has reached its intended end, an evaluation is queried from the concerned vehicle occupant (2), wherein data relating to an evaluation of the vehicle occupant is also transferred to the server device (5).

10. The method according to claim 9,
**characterized in that**
it is ascertained by means of the server device (5), in which evaluations combinations of respective routes and respective virtual contents have resulted, wherein those combinations, which exceed a preset evaluation number, are offered more often than before for reproduction in the future.

11. The method according to any one of the preceding claims,
**characterized in that**
it is ascertained by means of the server device (5), in which combinations of respective routes and respective virtual contents abortions in the reproduction of the virtual contents have occurred, wherein those combinations, which exceed a preset abortion rate, are offered more rarely than before for reproduction in the future.

12. A system (6) for evaluating virtual contents reproduced in motor vehicles (1) according to a method according to any one of the preceding claims, comprising a server device (5) external to vehicle and capturing devices (4) for capturing and transferring data to the server device (5) external to vehicle, which data characterizes a route traveled by means of the respective motor vehicle (1) during the reproduction of the virtual contents, the respective reproduced virtual contents and/or states of the vehicle occupants (2) during the reproduction of the virtual contents, wherein
the capturing devices (4) are formed to transfer the data to the server device (5) only if it is captured that a respective reproduction of virtual contents was aborted by respective vehicle occupants (2) in one of the motor vehicles (1), and if it is captured that a reproduction of virtual contents was aborted by a vehicle occupant (2) in one of the motor vehicles, in addition:
- to capture if the concerned vehicle occupant (2) causes another virtual content to be reproduced or omits a reproduction of any virtual contents thereafter, and to also transfer relevant data to the server device (5); and/or
- to output a query to the concerned vehicle occupant (2), why he has aborted the reproduction, and to also transfer data relating to an answer of the vehicle occupant (2) to the server device (5); wherein
the server device (5) is configured to evaluate the transferred data and to optimize the reproduction of the virtual contents in the respective motor vehicle (1) based on the evaluation.

## Revendications

1. Procédé pour évaluer des contenus virtuels reproduits dans des véhicules à moteur (1), comportant les étapes de :
- transmettre à un dispositif serveur (5) externe au véhicule des données qui caractérisent un trajet parcouru par le véhicule à moteur (1) respectif pendant la reproduction des contenus virtuels, les contenus virtuels et/ou les états reproduits respectifs des occupants de véhicule (2) respectifs pendant la reproduction des contenus virtuels, les données n'étant transmises au dispositif serveur (5) que lorsqu'il est détecté qu'une reproduction respective de contenus virtuels dans l'un des véhicules à moteur (1) a été interrompue par des occupants de véhicule (2) respectifs,
- lorsqu'il est détecté qu'une reproduction de contenus virtuels dans l'un des véhicules à moteur (1) a été interrompue par un occupant de véhicule (2) :
• détecter en outre si l'occupant de véhicule (2) concerné permet ensuite la reproduction d'un autre contenu virtuel ou se dispense d'une reproduction de tout contenu virtuel, les données associées étant également transmises au dispositif serveur (5),
et/ou
• demander à l'occupant de véhicule (2) concerné la raison pour laquelle il a interrompu la reproduction, les données concernant une réponse de l'occupant de véhicule (2) étant également transmises au dispositif serveur (5) ;
- évaluer les données transmises au moyen du dispositif serveur (5) externe au véhicule ;
- optimiser la reproduction des contenus virtuels dans le véhicule à moteur (1) respectif sur la base de l'évaluation des données transmises.

2. Procédé selon la revendication 1,
**caractérisé en ce que**
les contenus virtuels sont reproduits au moyen de lunettes de réalité virtuelle (3), de lunettes de réalité augmentée ou de lentilles de contact de réalité augmentée respectives portées par les occupants de véhicule (2), ou dans des affichages analogues à un contact intégrés dans des vitres respectives des véhicules à moteur.

3. Procédé selon l'une des revendications précédentes,
**caractérisé en ce que**
pour ce qui concerne les contenus virtuels reproduits respectifs, l'intensité des mouvements virtuels dans un environnement virtuel affiché respectif et/ou le type d'histoire reproduite au moyen des contenus virtuels est transmis au dispositif serveur (5).

4. Procédé selon l'une des revendications précédentes,
**caractérisé en ce que**
l'instant où la reproduction des contenus virtuel a été interrompue est transmis au dispositif serveur (5).

5. Procédé selon l'une des revendications précédentes,
**caractérisé en ce que**
pour ce qui concerne le trajet parcouru par le véhicule à moteur (1) respectif pendant la reproduction des contenus virtuels, un profil de virage et/ou un profil d'altitude respectif du trajet est détecté et transmis au dispositif serveur (5).

6. Procédé selon l'une des revendications précédentes,
**caractérisé en ce que**
pendant la reproduction des contenus virtuels, des valeurs corporelles mesurées caractérisant une nausée des occupants de véhicule (2) sont détectées au moyen d'un dispositif de détection côté véhicule et/ou au moyen de dispositifs de détection (4) portés par les occupants de véhicule (2) et sont transmises au dispositif serveur (5) qui détermine des valeurs de nausée respectives sur la base des valeurs corporelles mesurées.

7. Procédé selon la revendication 6,
**caractérisé en ce que**
un pouls et/ou des mouvements de tête sont détectés en tant que valeurs corporelles mesurées caractérisant une nausée des occupants de véhicule (2).

8. Procédé selon l'une des revendications 6 ou 7,
**caractérisé en ce que**
des combinaisons de trajets respectifs et de contenus virtuels respectifs pour lesquelles les valeurs de nausée détectées ont dépassé une valeur de nausée prédéfinie sont déterminées au moyen du dispositif serveur (5), les combinaisons pour lesquelles la valeur de nausée prédéfinie a été dépassée étant ensuite proposées pour la reproduction moins souvent que précédemment.

9. Procédé selon l'une des revendications précédentes,
**caractérisé en ce que**
lorsqu'il est détecté qu'une reproduction de contenus virtuels n'a pas été interrompue par un occupant de véhicule (2) avant que la reproduction atteigne sa fin prévue, une évaluation de l'occupant de véhicule (2) concerné est demandée, les données concernant une évaluation de l'occupant de véhicule étant également transmises au dispositif serveur (5).

10. Procédé selon la revendication 9,
**caractérisé en ce que**
les évaluations découlant de combinaisons de trajets respectifs et de contenus virtuels respectifs sont déterminées au moyen du dispositif serveur (5), les combinaisons pour lesquelles un nombre d'évaluations prédéfini a été dépassé étant ensuite proposées pour la reproduction plus souvent que précédemment.

11. Procédé selon l'une des revendications précédentes,
**caractérisé en ce que**
les combinaisons de trajets respectifs et de contenus virtuels respectifs pour lesquelles des interruptions se sont produites lors de la reproduction des contenus virtuels sont déterminées au moyen du dispositif serveur (5), les combinaisons pour lesquelles un taux d'interruption prédéfini a été dépassé étant ensuite proposées pour la reproduction moins souvent que précédemment.

12. Système (6) pour évaluer des contenus virtuels reproduits dans des véhicules à moteur (1) selon un procédé de l'une des revendications précédentes, comprenant un dispositif serveur (5) externe au véhicule et des dispositifs de détection (4) pour détecter et transmettre des données au dispositif serveur (5) externe au véhicule, lesquelles données caractérisent un trajet parcouru par le véhicule à moteur (1) respectif pendant la reproduction des contenus virtuels, les contenus virtuels reproduits respectifs et/ou les états respectifs des occupants de véhicule (2) pendant la reproduction des contenus virtuels,
les dispositifs de détection (4) étant configurés pour ne transmettre les données au dispositif serveur (5) que lorsqu'il est détecté qu'une reproduction respective de contenus virtuels dans l'un des véhicules à moteur (1) a été interrompue par des occupants de véhicule (2) respectifs, et lorsqu'il est déterminé qu'une reproduction de contenus virtuels dans l'un des véhicules à moteur a été interrompue par un occupant de véhicule (2) :
- détecter en outre si l'occupant de véhicule (2) concerné permet ensuite la reproduction d'un autre contenu virtuel ou se dispense d'une reproduction de tout contenu virtuel, et transmettre également les données associées au dispositif serveur (5) ;
et/ou
- demander à l'occupant de véhicule (2) concerné la raison pour laquelle il a interrompu la reproduction et transmettre également les données concernant une réponse de l'occupant de véhicule (2) au dispositif serveur (5) ;
le dispositif serveur (5) étant configuré pour analyser les données transmises et optimiser la reproduction des contenus virtuels dans le véhicule à moteur (1) respectif sur la base de l'analyse.
